# EUROPEAN PATENT APPLICATION

(11) **EP 4 477 706 A1**
(43) Date of publication of application: **18.12.2024**
(21) Application number: 23753091.0
(22) Date of filing: 06.02.2023
(51) Int. Cl.: C08L 23/00, C08L 77/00, C08L 69/00, C08L 67/02, C08L 71/12, C08J 3/12

(54) **ORGANIC FILLER AND RESIN COMPOSITION COMPRISING SAME**

(30) Priority: 11.02.2022 KR 20220018014
(71) Applicant: LS Cable & System Ltd., Anyang-si, Gyeonggi-do 14119 (KR)
(72) Inventor: HEO, Sung Ik, Gunpo-si, Gyeonggi-do 15809 (KR); NAM, Gi Joon, Seoul 06510 (KR); SHIN, Jung In, Hwaseong-si, Gyeonggi-do 18357 (KR); SHIN, Ji Wook, Seoul 04983 (KR)
(74) Representative: K&L Gates LLP
(86) International application number: PCT/KR2023/001655
(87) International publication number: WO 2023/153741

(57) **Abstract**

the present disclosure relates to an organic filler and a resin composition including the same. Specifically, the present disclosure relates to an organic filler and a resin composition including the same, which is capable of improving extrudability, glossiness, and the like of an engineering plastic as an organic filler for engineering plastics while significantly reducing manufacturing costs.

## Description

### [Technical Field]

the present disclosure relates to an organic filler and a resin composition including the same. Specifically, the present disclosure relates to an organic filler and a resin composition including the same, which is capable of improving extrudability, glossiness, and the like of an engineering plastic as an organic filler for engineering plastics while significantly reducing manufacturing costs.

### [Background Art]

A plastic material that has excellent impact resistance, abrasion resistance, cold resistance, chemical resistance, electrical insulation, and the like, and may replace metal or ceramic materials is referred to as an engineering plastic. In particular, as an engineering plastic, polycarbonate (PC) has excellent properties such as flame retardancy, heat resistance, impact resistance, and electrical insulation, and has been applied to electrical appliances such as a power outlet, a power strip, and the like.

As the polycarbonate (PC) has excellent physical properties, but has a high cost, which increases the manufacturing cost of the applied products, research has been carried out to mix the polycarbonate with an acrylonitrile-butadiene-styrene (ABS) resin or styreneacrylonitrile (SAN) resin, which has a lower cost compared to the conventional polycarbonate (PC), or with a polyolefin resin, which has a much lower cost, or to apply an inorganic filler.

However, the mixing of the polycarbonate (PC) with other resins or the application of the inorganic filler was not possible to be applied due to the poor compatibility of each other, resulting in a sharp decrease in physical properties and poor moldability such as an injection property.

In addition, there is a problem of an unnecessary glossy characteristic of the molded products manufactured due to the unique high glossiness of the polycarbonate (PC). Therefore, in the related art, there is a problem that the mold is deliberately oxidized to perform a matte treatment to reduce the glossy characteristic due to unnoticeable scratches or contamination to meet the consumer trend, and the like, which is cumbersome and increases the manufacturing costs.

Therefore, there is an acute need for a material that is capable of reducing the manufacturing costs of engineering plastics, including the polycarbonate (PC), without deteriorating the physical properties and moldability of the material, and in particular, a material that is capable of reducing the glossy characteristic of the product due to the unique glossiness of the polycarbonate (PC).

### [Disclosure]

### [Technical Problem]

The present disclosure is directed to providing an organic filler and a resin composition including the same, which is capable of adjusting extrudability, glossiness, and the like of an engineering plastic as an organic filler for engineering plastics while significantly reducing manufacturing costs.

### [Technical Solution]

To achieve the objects, the present disclosure is directed to providing an organic filler including a crosslinked resin powder.

Here, the crosslinked resin powder may include a crosslinked resin of a polyolefin-based resin, and a crosslinking degree of the crosslinked resin powder may be 20 to 60 %.

In addition, the polyolefin-based resin may include at least one selected from the group consisting of low-density polyethylene (LDPE), linear low-density polyethylene (LLDPE), high-density polyethylene (HDPE), polypropylene (PP), polyolefin elastomers (POE), ethylene vinyl acetate (EVA), ethylene ethyl acrylate (EEA), ethylene butyl acrylate (EBA), ethylene propylene rubber (EPR) and ethylene propylene diene rubber (EPDM).

In addition, the crosslinked resin powder may have a particle size (D₅₀) of 100 to 700 um.

Here, the crosslinking degree of the crosslinked resin powder may be 40 to 50 %, and the crosslinked resin powder may have a particle size (D₅₀) of 150 to 500 um.

In addition, the crosslinked resin powder may have a particle size (D₅₀) of 150 to 350 um.

Further, the crosslinked resin powder may have a weight average molecular weight (Mw) of 10,000 or more.

Further, the crosslinked resin powder may have a melting point of 110 °C or more, a specific gravity of 0.91 or more, a tensile strength of 1.7 kgf/mm² or more, and an elongation of 350 % or more.

Meanwhile, the present disclosure is directed to a resin composition including an engineering plastic resin and the organic filler.

Here, the engineering plastic resin may include at least one selected from the group consisting of polyamide, polyoxymethylene, polycarbonate, polybutylene terephthalate and modified polyphenylene oxide.

In addition, a content of the organic filler is 10 to 30 wt%, with respect to a total weight of the resin composition.

### [Advantageous Effects]

The organic filler according to the present disclosure includes a novel crosslinked resin powder, which exhibits excellent effects of being capable of adjusting the extrudability and glossiness of engineering plastic, while significantly reducing the manufacturing costs.

### [Description of Drawings]

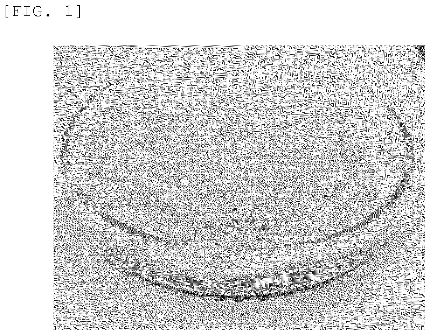

FIG. 1 is a photograph of an organic filler according to the present disclosure.

### [Modes of the Invention]

Hereinafter, exemplary embodiments of the present disclosure will be described in detail. However, the present disclosure is not limited to the exemplary embodiments to be described below and may be specified as other aspects. On the contrary, the embodiments introduced herein are provided to make the disclosed content thorough and complete, and sufficiently transfer the spirit of the present disclosure to those skilled in the art.

An organic filler according to the present disclosure includes a crosslinked resin powder.

The crosslinked resin powder may be manufactured as illustrated in FIG. 1 by powdering and recycling a crosslinked resin that has already been molded into a specific product or component thereof in a batch or continuous facility, such as a twin screw extruder, single screw extruder, Banbury mixer, particle grinder, and the like, at a barrel temperature of less than 200 °C and a speed of 100 rpm or greater.

Specifically, the crosslinked resin may include a polyolefin-based resin, for example, a resin such as low-density polyethylene (LDPE), linear low-density polyethylene (LLDPE), high-density polyethylene (HDPE), polypropylene (PP), polyolefin elastomers (POE), ethylene vinyl acetate (EVA), ethylene ethyl acrylate (EEA), ethylene butyl acrylate (EBA), ethylene propylene rubber (EPR), ethylene propylene diene rubber (EPDM), and the like, which has been crosslinked by methods such as water crosslinking, chemical crosslinking, irradiation crosslinking, and the like.

Here, the crosslinked resin powder may have a crosslinking degree of 20 to 60 %, preferably 40 to 50 %, and a gel fraction of the crosslinked resin powder, in which the crosslinked resin with a gel fraction of 70 to 85 % is powdered, may be adjusted to 20 to 60 %, preferably 40 to 50 %, so that the crosslinked resin powder may maintain a certain shape without being deteriorated under the working temperature condition of the engineering plastic, and may reduce the pressure of an injection molding machine to improve the long-term extrusion property of the engineering plastic and reduce the manufacturing costs.

Meanwhile, when the crosslinking degree or gel fraction of the crosslinked resin powder is below a reference, the reinforcement effect by the addition of the organic filler may be insufficient, in contrast, when exceeding the reference, the moldability, such as extrudability, may be significantly degraded.

Here, the gel fraction of the crosslinked resin powder may be measured by extraction and quantification in a xylene solvent in accordance with ASTM standard D 2765. Specifically, a specimen manufactured by extrusion molding of the crosslinked resin powder may be extracted with a toluene solvent to measure the gel fraction, which is a ratio of a weight of a residue after extraction to a weight before extraction of the specimen.

In addition, the crosslinked resin powder may have a weight average molecular weight (Mw) of 10,000 or more, for example, 10,000 to 200,000. Here, the reinforcement effect caused by the organic filler may be insufficient when the weight average molecular weight (Mw) of the crosslinked resin is less than 10,000. Here, the weight average molecular weight (Mw) of the crosslinked resin powder may be measured, for example, using a gel permeation chromatograph (GPC).

Further, the crosslinked resin powder may have a melting point of 110 °C or more, a specific gravity of 0.91 or more, a tensile strength of 1.7 kgf/mm² or more, and an elongation of 350% or more. Here, the melting point of the crosslinked resin powder may be measured using differential scanning calorimetry (DSC) in accordance with ASTM E 794 standard, and the specific gravity, tensile strength, and elongation may be measured in accordance with ASTM D 638 standard.

Meanwhile, the crosslinked resin powder may have a particle size of 100 to 700 um, preferably 150 to 500 µm, more preferably 150 to 350 um. Here, the particle size means a particle diameter (D₅₀) corresponding to 50 % of the maximum size in the particle size distribution. When the particle size (D₅₀) of the crosslinked resin powder is less than 100 µm, the reinforcement effect caused by the organic filler is degraded, in contrast, when the particle size (D₅₀) of the crosslinked resin powder is greater than 700 µm, the fluidity of a resin composition to which the organic filler is added may be degraded, resulting in poor workability and moldability.

For reference, the particle size of the crosslinked resin powder may be measured by electron microscopy such as SEM/EDS and the like. For example, 3 to 5 tape samples are prepared by sprinkling the powder evenly on a carbon tape and blowing with air so that only the powder that adheres well to the tape remains. For each sample, at least 10 long axes of particles that come within 50x magnification are measured, and a total of 30 or more particle size data may be collected to measure the minimum value and maximum value of particle size, the particle size distribution, the average particle diameter, and the like.

In the related art, formulations of two or more types of polymer resins, use of expensive engineering plastic resins, use of general additives, performing a crosslinking process, and the like have been used to improve properties required according to the application for which the polymer resin is used, but there has been no precedent for using the crosslinked resin already applied to a molded product as an organic filler by powdering and recycling the crosslinked resin as in the present disclosure. The organic filler including the crosslinked resin powder according to the present disclosure equally satisfies mechanical properties such as tensile strength, elongation, hardness, and the like of the engineering plastics to which the organic filler is added, flame retardancy, heat resistance, and the like, improves moldability such as long-term extrudability due to the low melting point of the filler added, and exhibits excellent effects that are cost-saving and eco-friendly.

The present disclosure relates to a resin composition in which the organic filler is added to a base resin.

The base resin may include an engineering plastic such as polyamide, polyoxymethylene, polycarbonate, polybutylene terephthalate, modified polyphenyleneoxide, and the like.

In particular, the content of the organic filler may be 10 to 30 wt%, with respect to a total weight of the resin composition. Here, when the content of the organic filler is less than 10 wt%, the strength or hardness of the resin composition may be insufficient. In contrast, when the content of the organic filler is greater than 30 wt%, the extrudability and workability of the resin composition may be degraded.

### [Examples]

### 1. Manufacturing Example

As described in Table 1 below, the resin composition was manufactured in which the polycarbonate (PC) resin was mixed with the organic filler that includes the crosslinked resin powder. The unit of content listed in Table 1 below is wt%.

**[Table 1]**

| | Polycarbo nate (PC) | Organic filler |
|---|---|---|
| Example 1 | 90 | 10 |
| Example 2 | 80 | 20 |
| Example 3 | 70 | 30 |
| Comparati ve Example 1 | 60 | 40 |
| Comparati ve Example 2 | 100 | 0 |

### 2. Evaluating properties

### 1) Pressure of injection molding machine

Pressure was measured when each resin composition of the examples and comparative examples was injection molded in the injection molding machine.

### 2) Ball pressure test

After a power strip housing was injection molded with each resin composition of the examples and comparative examples, the surface of the power strip was pressed with a ball at a force of 20 N at 125 °C for 1 hour, and the diameter of the compression marks caused by the ball was measured according to section 25.2 of the KC60884-1 power strip standard, and evaluated whether the diameter was 2 mm or less.

### 3) Glow wire test

After a power strip housing was injection molded with each of the resin compositions of the examples and comparative examples, the state of the thin paper was observed and evaluated for the absence of flame and incandescence, or extinguishment within 30 seconds, during a test caused by contact with a glow wire electrically heated at 750±10°C for 30 seconds, in accordance with section 28.1.1 of the KC60884-1 power strip standard.

### 4) Surface glossiness test

After a mirror-finishing circular injection molded specimen having a diameter of 55 mm and a thickness of 3.2 mm was manufactured with each resin composition of the examples and comparative examples, the surface glossiness was measured in accordance with the ISO 2813 (60 degrees) standard using a gloss meter (model name: REF060, manufacturer: DRLANGE).

The results of the property evaluation are shown in Table 2 below.

**[Table 2]**

| | Press ure of injection molding machine (bar) | Ball pressure test (mm) | Glow wire test | Gl ossines s (%) |
|---|---|---|---|---|
| Exa mple 1 | 79 | 1.59 | ok | 49 |
| Exa mple 2 | 75 | 1.61 | ok | 46 |
| Exa mple 3 | 69 | 1.69 | ok | 44 |
| Com parative Example 1 | 68 | 2.3 | ok | 40 |
| Com parative Example 2 | 85 | 1.1 | ok | 90 |

| | | | | |
|---|---|---|---|---|
| OK: No flame during test, thin paper state is good, extinguished within 1 second after test | | | | |

As described in Table 2, it was confirmed that Examples 1 to 3, which mix the polycarbonate with the organic filler of an appropriate content of crosslinked resin powder, have mechanical strength and flame retardant properties satisfied with the standard, while the pressure at injection molding is controlled to 80 bar or less, and the matte characteristic with reduced glossiness is also sufficiently implemented.

Meanwhile, it was confirmed that Comparative Example 1, in which an excessive amount of organic filler was mixed, resulted in a significant decrease in mechanical strength, and Comparative Example 2, in which no organic filler was mixed and only polycarbonate (PC) was used, resulted in a significant increase in pressure of the injection molding machine, leading to a decrease in moldability, and an unnecessary glossy characteristic was implemented.

While the present disclosure has been described above with reference to the exemplary embodiments, it may be understood by those skilled in the art that the present disclosure may be variously modified and changed without departing from the spirit and scope of the present disclosure disclosed in the claims. Therefore, it should be understood that any modified embodiment that essentially includes the constituent elements of the claims of the present disclosure is included in the technical scope of the present disclosure.

## Claims

1. An organic filler comprising a crosslinked resin powder

2. The organic filler of claim 1, wherein the crosslinked resin powder includes a crosslinked resin of a polyolefin-based resin, and
wherein a crosslinking degree of the crosslinked resin powder is 20 to 60 %.

3. The organic filler of claim 2, wherein the polyolefin-based resin includes at least one selected from the group consisting of low-density polyethylene (LDPE), linear low-density polyethylene (LLDPE), high-density polyethylene (HDPE), polypropylene (PP), polyolefin elastomers (POE), ethylene vinyl acetate (EVA), ethylene ethyl acrylate (EEA), ethylene butyl acrylate (EBA), ethylene propylene rubber (EPR) and ethylene propylene diene rubber (EPDM).

4. The organic filler of any one of claims 1 to 3, wherein the crosslinked resin powder has a particle size (D₅₀) of 100 to 700 um.

5. The organic filler of claim 4, wherein the crosslinking degree of the crosslinked resin powder is 40 to 50 %, and
wherein the crosslinked resin powder has a particle size (D₅₀) of 150 to 500 um.

6. The organic filler of claim 5, wherein the crosslinked resin powder has a particle size (D₅₀) of 150 to 350 um.

7. The organic filler of any one of claims 1 to 3, wherein the crosslinked resin powder has a weight average molecular weight (Mw) of 10,000 or more.

8. The organic filler of any one of claims 1 to 3, wherein the crosslinked resin powder has a melting point of 110 °C or more, a specific gravity of 0.91 or more, a tensile strength of 1.7 kgf/mm² or more, and an elongation of 350 % or more.

9. A resin composition comprising an engineering plastic resin and the organic filler of any one of claims 1 to 3.

10. The resin composition of claim 9, wherein the engineering plastic resin includes at least one selected from the group consisting of polyamide, polyoxymethylene, polycarbonate, polybutylene terephthalate and modified polyphenylene oxide.

11. The resin composition of claim 9, wherein a content of the organic filler is 10 to 30 wt%, with respect to a total weight of the resin composition.
